# EUROPÄISCHE PATENTSCHRIFT

(11) **EP 1 772 051 B1**
(45) Veröffentlichungstag und Bekanntmachung des Hinweises auf die Patenterteilung: **09.07.2008**
(21) Anmeldenummer: 06018061.9
(22) Anmeldetag: 30.08.2006
(51) Int. Cl.: A01D 34/30, A01D 34/32

(54) **Antriebseinheit für ein Mähmesser**
Drive unit for a mowing blade
Unité d'entraînement pour une lame de coupe

(30) Priorität: 10.10.2005 DE 102005048766
(43) Veröffentlichungstag der Anmeldung: 11.04.2007
(73) Patentinhaber: Schumacher, Günter, 57612 Eichelhardt (DE)
(72) Erfinder: Schumacher, Günter, 57612 Eichelhardt (DE); Schumacher, Gustav, 57612 Eichelhardt (DE)
(74) Vertreter: Harwardt, Günther

(56) Entgegenhaltungen:
- DE-A1- 3 207 418
- DE-A1- 3 615 058
- US-B1- 6 273 214

## Beschreibung

Die Erfindung betrifft eine Antriebseinheit für oszillierend angetriebene Mähmesser umfassend
- eine erste Getriebeeinheit,
   - die ein erstes Gehäuse aufweist, welches eine erste Achse bildet,
   - die einen in dem ersten Gehäuse um die erste Achse drehbar gelagerten Rotor aufweist,
   - die ein in dem ersten Gehäuse festgelegtes und innen verzahntes erstes Hohlzahnrad aufweist,
   - die ein in dem Rotor um eine zweite Achse drehbar gelagertes Zahnritzel aufweist, wobei die zweite Achse zur ersten Achse radial versetzt ist und das Zahnritzel das Abtriebsglied der Antriebseinheit bildet und mit dem ersten Hohlzahnrad in Eingriff ist,
- eine zweite Getriebeeinheit,
   - deren Abtrieb mit dem Rotor der ersten Getriebeeinheit drehfest verbunden ist.

Dabei sind Mähmesser im Einsatz, die Arbeitsbreiten bereitstellen, die in der Größenordnung von 6 bis 18 Metern liegen.

Diese Mähmesser werden durch Antriebe unterschiedlichster Bauart angetrieben. Bewährt haben sich insbesondere für Mähmesser für große Mähbreiten, d.h. dort wo hohe Leistungen gefordert werden, solche Antriebseinheiten, die eine Getriebeeinheit umfassen, welche die Drehbewegung unmittelbar in eine hin und her gehende Bewegung umwandeln und unmittelbar mit dem Messerkopf des Mähmessers in Wirkverbindung stehen, um dieses oszillierend anzutreiben.

Die US 6 273 214 B1 zeigt eine Winkelgetriebeanordnung zum Antrieb eines Mähmessers. Hierbei ist eine erste Getriebeeinheit vorgesehen, die eine rotatorische Bewegung in eine translatorische Bewegung zum Antreiben des Mähmessers umwandelt. Ferner ist eine zweite Getriebeeinheit in Form eines Winkelgetriebes vorgesehen. Die zweite Getriebeeinheit dient der Drehrichtungsänderung, da die Antriebseinheit von einem entfernt angeordneten Motor über einen Riementrieb und eine Riemenscheibe angetrieben wird. Hierbei muß die Rotation der Riemenscheibe, die sich um eine horizontale Achse dreht, umgelenkt werden in eine Rotationsbewegung um eine vertikale Achse. Hierzu dient die zweite Getriebeeinheit in Form des Winkelgetriebes.

Eine Getriebeeinheit zum Antreiben eines Mähmessers ist ferner in der DE 36 15 058 C2 beschrieben und weist ein Gehäuse auf, welches eine erste Achse bildet. Die Getriebeeinheit umfasst einen in dem Gehäuse um die erste Achse drehbar gelagerten Rotor, der von einem Antriebsaggregat angetrieben wird. In dem Gehäuse ist ein innen verzahntes Hohlzahnrad stationär befestigt, d.h. dieses rotiert gegenüber dem Gehäuse nicht. Der Rotor ist in Lagern im Gehäuse gehalten. An dem Rotor selbst ist wiederum um eine zweite Achse ein Zahnritzel drehbar gelagert. Die zweite Achse ist radial zur ersten Achse versetzt. Das Zahnritzel bildet das Abtriebsglied des Getriebes und ist mit dem Hohlzahnrad in Eingriff.

In der Praxis wird eine solche Getriebeeinheit beispielsweise durch einen Riementrieb von einem Antriebsmotor aus angetrieben. Zusätzlich wird häufig eine Schwungmasse vorgesehen, um auch plötzlich auftretende Belastungen bewältigen zu können.

Solche Antriebseinheiten benötigen jedoch einen erheblichen Platzbedarf. Wenn ein Hydraulikmotor der Getriebeeinheit unmittelbar zugeordnet werden soll, ergeben sich erhebliche Baugrößen. Hydraulikmotoren sind jedoch im Zusammenhang mit der vorbeschriebenen Getriebeeinheit nur für geringe Drehzahlen, d.h. wegen des hohen Verbrauchsvolumens nur für Erntemaschinen, die eine aufwendige Hydraulik aufweisen, geeignet.

Der Erfindung liegt die Aufgabe zugrunde, eine eingangs genannte Antriebseinheit für ein oszillierend angetriebenes Mähmesser zu schaffen, die klein baut, so dass die nutzbare Arbeitsbreite günstiger wird und die für hohe Leistungsanforderungen geeignet ist.

Gelöst wird diese Aufgabe erfindungsgemäß dadurch, dass die zweite Getriebeeinheit als Untersetzungsgetriebe gestaltet ist, und dass die Antriebseinheit ferner einen Motor umfasst, der eine Abtriebswelle aufweist, die die zweite Getriebeeinheit drehend antreibt und dessen Drehzahl (N1) von der als Untersetzungsgetriebe gestalteten zweiten Getriebeeinheit auf die Antriebsdrehzahl (N2) der ersten Getriebeeinheit reduziert wird.

Von Vorteil ist, dass dadurch, dass eine zweite Getriebeeinheit zusätzlich vorgesehen ist, Motoren genutzt werden können, die eine deutlich verringerte Leistung gegenüber der Ausgestaltung mit nur einer Getriebeeinheit aufweisen müssen. Es können nämlich schnelllaufende Hydraulikmotoren oder Elektromotoren gewählt werden, deren Abtriebsdrehzahl im Bereich von 3000 bis maximal 4000 Umdrehungen pro Minute liegt. Die zweite Getriebeeinheit kann verschiedenartig gestaltet sein, z.B. als Stirnrad- oder Planetenradgetriebe, und setzt aufgrund ihrer Konstruktion diese hohe Antriebsdrehzahl wirksam in eine niedrige Drehzahl um, die zum Antrieb der ersten Getriebeeinheit genutzt werden kann. Bei der zweiten Getriebeeinheit ist das Übersetzungsverhältnis zwischen dem Zahnritzel und dem Rotor so gewählt, das am Abtrieb eine lineare Bewegung zur Verfügung steht, durch die das Mähmesser unmittelbar linear hin- und hergehend angetrieben werden kann.

Eine besonders günstige Gestaltung und Wirkungsweise ergibt sich bei einem Aufbau, der dadurch gekennzeichnet ist,
- dass die zweite Getriebeeinheit
   - einen mit dem Rotor der ersten Getriebeeinheit drehfest verbundenen und mit dieser um die erste Achse rotierenden Planetenradträger umfasst, der mindestens ein außen verzahntes Planetenzahnrad trägt, das an diesem um eine dritte Achse, die zur ersten Achse radial versetzt angeordnet ist, drehbar gelagert ist,
   - ein innen mit einer Verzahnung versehenes zweites Hohlzahnrad aufweist, das stationär gehalten ist und mit dem das mindestens eine Planetenzahnrad in Eingriff ist,
   - ein Sonnenzahnrad aufweist, das mit dem mindestens einen Planetenzahnrad in Eingriff ist, und
- dass die Antriebseinheit des Motors das Sonnenzahnrad der zweiten Getriebeeinheit drehend antreibt.

Von Vorteil bei diesem Aufbau ist, dass schnelllaufende Hydraulikmotoren oder Elektromotoren genutzt werden können, die nur ein kleines Bauvolumen aufweisen. Die zusätzliche zweite Getriebeeinheit ist durch ihre Ausgestaltung besonders platzsparend und günstig an die erste Getriebeeinheit anzuschließen. Günstig ist ebenfalls, dass auch der Motor in die Antriebseinheit unmittelbar einbezogen werden kann. Vorzugweise sind drei Planetenzahnräder vorgesehen.

In Ausgestaltung ist vorgesehen, dass die zweite Getriebeeinheit ein zweites Gehäuse aufweist, das am ersten Gehäuse befestigt ist und das den Planetenradträger mit dem mindestens einen Planetenzahnrad, das zweite Hohlzahnrad und das Sonnenzahnrad aufnimmt.

Von Vorteil ist dabei, dass das separate Gehäuse für die zweite Getriebeeinheit erlaubt, die erste Getriebeeinheit beispielsweise in Kombination mit normalen, d.h. üblichen Antrieben zu nutzen, die so groß bemessen sind, dass die Leistung bereit gestellt wird, die zum unmittelbaren Antrieb des Mähmessers über die erste Getriebeeinheit ausreichend ist.

Es ist jedoch auch möglich, dass die zweite Getriebeeinheit einen Gehäuseabschnitt aufweist, der einstückig mit dem ersten Gehäuse ausgebildet ist und den Planetenradträger mit dem mindestens einen Planetenzahnrad, das Sonnenzahnrad und das zweite Hohlzahnrad aufnimmt.

Besonders günstig ist eine Ausgestaltung der Antriebseinheit dergestalt, dass die zweite Getriebeeinheit durch ein Schmierfett geschmiert ist und dass zwischen dem Planetenradträger und dem zweiten Gehäuse oder Gehäuseabschnitt, in dem dieser aufgenommen ist, eine Trennscheibe angeordnet ist, die in Richtung zum ersten Gehäuses hin den das zweite Hohlzahnrad, das mindestens eine Planetenzahnrad und das Sonnenzahnrad aufnehmenden Raum abdichtet. Auch die erste Getriebeeinheit kann durch ein Schmierfett geschmiert sein, so dass zwischen den beiden Getriebeeinheiten keine absolut dichte Abdichtung erforderlich ist, die für unterschiedliche Schmiermittel erforderlich wäre, nämlich z.B. Öl und Schmierfett.

Dabei kommt als Schmierfett beispielsweise ein üblicherweise im Maschinenbau eingesetztes Litium verseiftes Fett in Frage.

Bei der erfindungsgemäßen Gestaltung erübrigt sich eine Kühlung für den Motor, auch insbesondere eine Ölkühlung, die auch praktisch nicht bereit gestellt werden muss, da Hydraulikmotoren eingesetzt werden können, die nur geringe Ölströme benötigen, um die Antriebseinheit gemäß der Erfindung zu betreiben. Durch die Trennscheibe wird gewährleistet, dass das Schmierfett in dem Bereich bzw. Raum verbleibt, in dem die Zahnräder miteinander kämmen, d.h. in dem Raum in dem das zweite Hohlzahnrad, das mindestens eine Planetenzahnrad und das Sonnenzahnrad angeordnet sind.

Das Schmiermittel kann somit nicht in Richtung zur ersten Getriebeeinheit bzw. nach außen entweichen. Bevorzugt ist eine Anordnung, bei der die Trennscheibe zwischen dem zweiten Gehäuse oder Gehäuseabschnitt und dem zweiten Hohlzahnrad und dem Planetenradträger angeordnet ist. Es wird also der Spalt zwischen dem Planetenradträger und dem zweiten Gehäuse überbrückt und zwar in radialer Richtung bezogen auf die erste Achse. Ferner wird im Zusammenwirken mit dem Deckel des zweiten Gehäuses und dem zweiten Gehäuse selbst ein abgeschlossener Raum gebildet.

Vorzugsweise ist die Trennscheibe am zweiten Gehäuse bzw. am Gehäuseabschnitt drehfest gehalten. Die Relativbewegung findet gegenüber dem Planetenradträger statt. Dieser rotiert relativ zur Trennscheibe.

Ferner ist in Ausgestaltung der Erfindung vorgesehen, dass zwischen dem Motor und dem Sonnenzahnrad der zweiten Getriebeeinheit ein Schwungrad angeordnet ist.

Wenn die Platzverhältnisse es erlauben, ist es auch möglich, dass die zweite Getriebeeinheit ein mit dem Rotor der ersten Getriebeeinheit drehfest verbundenes und mit diesem um die erste Achse rotierendes stirnverzahntes Zahnrad und ein damit kämmendes stirnverzahntes Zahnritzel umfasst, welches um eine zur ersten Achse parallele vierte Achse rotiert und von dem Motor angetrieben wird. Dabei sind zwei Anordnungsmöglichkeiten für den Motor gegeben.

Eine erste Ausführung sieht vor, dass der Motor parallel zu und neben der ersten Getriebeeinheit angeordnet ist. In diesem Zusammenhang kann ergänzend ein Schwungrad vorgesehen sein, welches mit dem Zahnritzel drehend verbunden ist und an der der ersten Getriebeeinheit und dem Motor abgewandten Seite der zweiten Getriebeeinheit angeordnet ist.

Die zweite Anordnungsmöglichkeit sieht vor, dass der Motor parallel und von der ersten Getriebeeinheit weg weisend an die zweite Getriebeeinheit angeschlossen ist. Hierzu kann ebenfalls ergänzend ein Schwungrad vorgesehen sein, welches mit dem Zahnritzel drehend verbunden ist und an der der ersten Getriebeeinheit zugewandten Seite der zweiten Getriebeeinheit neben der ersten Getriebeeinheit angeordnet ist.

Bei beiden Ausführungen ist es möglich, dass die zweite Getriebeeinheit ein zweites Gehäuse aufweist, das an dem ersten Gehäuse der ersten Getriebeeinheit befestigt ist oder mit diesem zumindest teilweise eine Einheit bildet.

Für alle Ausführungsvarianten kann der Motor als schnelllaufender Hydraulikmotor oder Elektromotor gestaltet sein. Hierdurch wird eine platzsparende Bauweise erzielt.

Das Schwungrad hält die nötige Durchzugskraft bereit, wenn sich Belastungsspitzen ergeben.

Bevorzugte Ausführungsbeispiele sind in der Zeichnung schematisch dargestellt.

Es zeigt
- Figur 1: ein erstes Ausführungsbeispiel gemäß der Erfindung im Schnitt, wobei der Motor zentral über der zweiten Getriebeeinheit angeordnet ist und die zweite Getriebeeinheit durch ein Planetengetriebe dargestellt ist,
- Figur 2: ein zweites Ausführungsbeispiel in einer Ansicht, wobei die Getriebeeinheit ein Stirnradgetriebe ist und der Motor parallel versetzt zur ersten Getriebeeinheit, jedoch von dieser weg weisend angeordnet ist, und
- Figur 3: ein drittes Ausführungsbeispiel in einer Ansicht, wobei die zweite Getriebeeinheit ein Stirnradgetriebe ist und der Motor parallelversetzt zur ersten Getriebeeinheit neben dieser angeordnet ist.

Die Zeichnungsfigur 1 zeigt einen Schnitt entlang der ersten Achse der Antriebseinheit.

Die erste Ausführungsform einer erfindungsgemäßen Antriebseinheit umfasst eine erste Getriebeeinheit 1, an die sich eine zweite Getriebeeinheit 2 anschließt, wobei als schnelllaufender Motor ein Hydraulikmotor 4 zum Antrieb der zweiten Getriebeeinheit 2 vorgesehen ist, der jedoch auch durch einen Elektromotor ersetzt werden kann. Zwischen dem Hydraulikmotor 4 und der zweiten Getriebeeinheit 2, die das Eingangsgetriebe darstellt, ist eine Schwungmasse in Form eines Schwungrades 3 angeordnet.

Die erste Getriebeeinheit 1 weist ein erstes Gehäuse 5 auf, das eine erste Achse 6 bildet. In dem ersten Gehäuse 5 ist ein Rotor 7 in einem ersten Lager 8 und dazu beabstandeten zweiten Lager 9, die in Form von Wälzlagern vorgesehen sind, drehbar um die erste Achse 6 gelagert.

In dem ersten Gehäuse 5 ist ferner ein erstes Hohlzahnrad 10 angeordnet, das einen Abschnitt des Rotors 7 umschließt und innen eine Verzahnung 11 aufweist. Der Rotor 7 weist außermittig bezüglich der ersten Achse 6 eine Ausnehmung 13 auf, die zu seinem Umfang hin offen ist. In dieser Ausnehmung 13 ist ein Zahnritzel 14 mit der Verzahnung 15 aufgenommen. Dieses ist einem dritten Lager 16 und einem dazu beabstandet angeordneten vierten Lager 17 in Form von Wälzlagern drehbar um eine zweite Achse 12 gelagert. Die zweite Achse 12 ist zur ersten Achse 6 radial versetzt und verläuft parallel zu dieser. Die Verzahnung 15 des Zahnritzels 14 ist mit der Verzahnung 11 auf dem Innenumfang des ersten Hohlzahnrades 10 in Eingriff. Das Zahnradritzel 14 stellt das Abtriebsglied dar. An dem Zahnradritzel 14 ist ein Abtriebselement 18 durch eine Schraube 19 festgelegt und mit dem Zahnritzel 14 über wenigstens einen Stift 20 drehfest verbunden. Das Abtriebselement 18 umfasst ein zapfenartiges Element, das in eine Bohrung eines nicht dargestellten Messerkopfes zum Antrieb eines Mähmessers eingreift.

Die an die erste Getriebeeinheit 1 angeschlossene und dieser vorgeschaltete zweite Getriebeeinheit 2 umfasst ein zweites Gehäuse 21, das durch in der Zeichnung nicht dargestellte Mittel, beispielsweise Schrauben fest mit dem ersten Gehäuse 5 der ersten Getriebeeinheit 1 verbunden ist. Es ist auch eine Ausbildung denkbar, bei der diese beiden Gehäuse einstückig ausgebildet sind und somit das beim vorliegenden Beispiel getrennte zweite Gehäuse 21 einen Abschnitt des ersten Gehäuses 5 bildet.

Das zweite Lager 9, das den Lagerzapfen 27 des Rotors 7 lagert, dient gleichzeitig zur Lagerung des Planetenradträgers 23, der eine Lagerbohrung 26 aufweist, in der der Lagerzapfen 27 des Rotors 7 aufgenommen ist.

Das zweite Gehäuse 21 ist ferner durch einen Deckel 22 abgeschlossen. Dieser schließt das dem ersten Gehäuse 5 entfernte Ende des zweiten Gehäuses 21 ab. An dem Planetenradträger 23 sind über Lagerstifte 32, die in Bohrungen des Planetenradträgers 23 einsitzen, drei Planetenzahnräder 33 drehbeweglich angeordnet. Die Lagerstifte 32 bilden dritte Achsen 24 für die Planetenzahnräder 33, welche zur ersten Achse 6 radial versetzt angeordnet sind und um die diese rotieren. Zwischen dem Deckel 22, dem Planetenradträger 23 und dem zweiten Gehäuse 21 ist ein Raum 38 gebildet, in dem die Planetenzahnräder 33, ein diese umschließendes zweites Hohlzahnrad 31 und ein Sonnenzahnrad 34 angeordnet sind. Der Raum 38 ist in Richtung zur ersten Getriebeeinheit 1 über eine Trennscheibe 37 abgedichtet, welche zwischen einer Anlagefläche 36 am zweiten Gehäuse und einer Anlagefläche 37 des zweiten Hohlzahnrades 31 gehalten ist und zusätzlich sich gegen eine Anlagefläche 35 am Planetenradträger 23 abstützt, so dass der Spalt zwischen Planetenradträger 23 und zweitem Gehäuse 21 abgedichtet wird. Die Trennscheibe 37 ist gleichzeitig mit nicht dargestellten Mitteln zur Fixierung des zweiten Hohlzahnrades 31 gegenüber dem zweiten Getriebegehäuse 21 in Form von Stiften undrehbar gehalten. Eine Relativdrehbewegung ist jedoch zwischen dem Planetenradträger 23 und der Trennscheibe 37 gegeben. Die Trennscheibe 37 dichtet den Raum 38 ab. Das Schmierfett S kann die Spalte in diesem Bereich auch zwischen den Zahneingriffen der Planetenzahnräder 33 mit der Innenverzahnung des zweiten Hohlzahnrades 31 sowie der Außenverzahnung des Sonnenzahnrades 34 abdichten und nicht aus den Zwischenräumen entweichen. Es ist für eine Dauerschmierung der zweiten Getriebeeinheit 2 gesorgt.

Das Sonnenzahnrad 34 besitzt einen ersten Zapfenabschnitt 39, der unter Zwischenschaltung eines fünften Lagers 29 in einer Bohrung des Lagerzapfens 27 des Rotors 7 relativ zu diesem drehbar aufgenommen ist. Der Planetenradträger 23 ist mit dem Lagerzapfen 27 des Rotors 7 über einen Keil 28 verbunden, so dass beide miteinander drehen.

Das Sonnenzahnrad 34 weist einen zweiten Zapfenabschnitt 40 auf, der in einer Bohrung 25 des Schwungrades 3 aufgenommen ist. Es ist über ein sechstes Lager 30 zusammen mit dem Schwungrad 3 in dem Deckel 22 der zweiten Getriebeeinheit 2 gelagert. Das Schwungrad 3 ist drehfest mit dem Sonnenzahnrad 34 verbunden. Dieses bildet den Getriebeeingang für die zweite Getriebeeinheit 2 und wird mit der Drehzahl N1 von dem Hydraulikmotor 4 angetrieben. Dessen Abtriebswelle 45 ist mit dem Schwungrad 3 über eine Kupplungshülse 42 drehfest verbunden. Die Kupplungshülse 42 ist über Schrauben 43 an dem Schwungrad 3 festgelegt. Das Schwungrad 3 ist ferner mit dem Sonnenzahnrad 34 über eine Welle-Nabe-Verbindung und über eine Fixierscheibe 41 fest verbunden, welche über eine Schraube, die in eine Gewindebohrung des Sonnenzahnrades 34 eingreift, festgelegt ist.

Der Hydraulikmotor 4 sitzt auf einem Brückenelement 44, das mit dem zweiten Gehäuse 21 verbunden ist und das Schwungrad 3 überspannt. Der mit einer hohen Drehzahl N1 von ungefähr 4000 Umdrehungen pro Minute rotierende schnell laufende und nicht näher dargestellten Hydraulikmotor 4 treibt das Sonnenzahnrad 34 der zweiten Getriebeeinheit 2 mit der Eingangsdrehzahl N1 an. Diese wird über die zweite Getriebeeinheit 2 auf die Drehzahl N2 reduziert, die die Eingangsdrehzahl für die erste Getriebeeinheit 1 bildet. Dies ist die Drehzahl N2, mit der der Rotor 7 über den Planetenradträger 23 angetrieben wird und der das Abtriebsglied der zweiten Getriebeeinheit 2 darstellt. Die erste Getriebeeinheit 1 setzt die Drehbewegung des Rotors 7 in eine gradlinige Bewegung des Abtriebszapfens des Abtriebselementes 18 um, das mit dem nicht dargestellten Messerkopf eines Mähmessers in Wirkverbindung steht, um dieses linear hin- und hergehend anzutreiben.

Durch die besondere Gestaltung der zweiten Getriebeeinheit 2 und insbesondere deren Abdichtung wird eine Dauerschmierung erreicht. Die zweite Getriebeeinheit ist praktisch wartungsfrei. Lediglich die erste Getriebeeinheit 1 muss in Intervallen abgeschmiert werden. Bei dieser ist auch eine Fettschmierung vorgesehen.

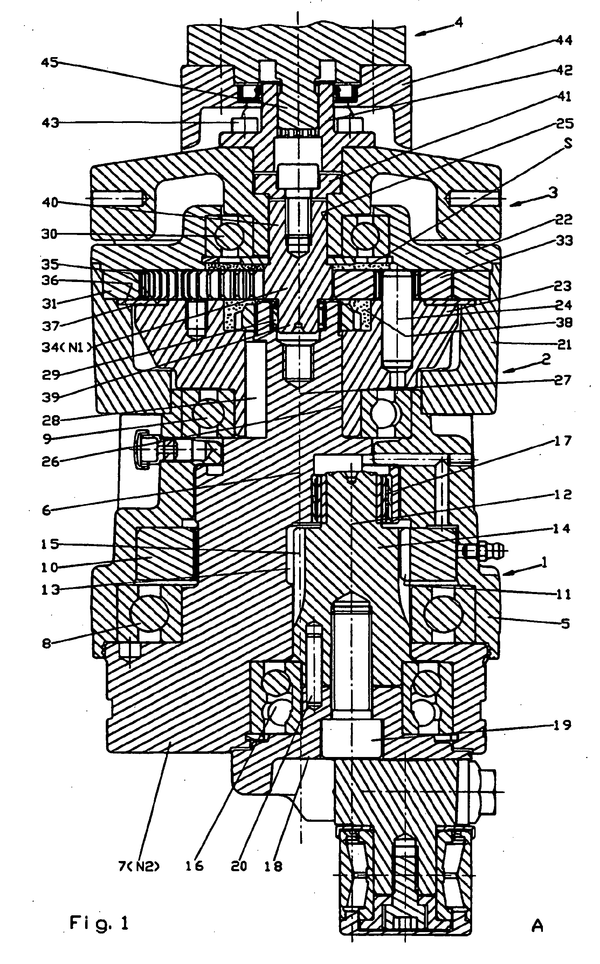

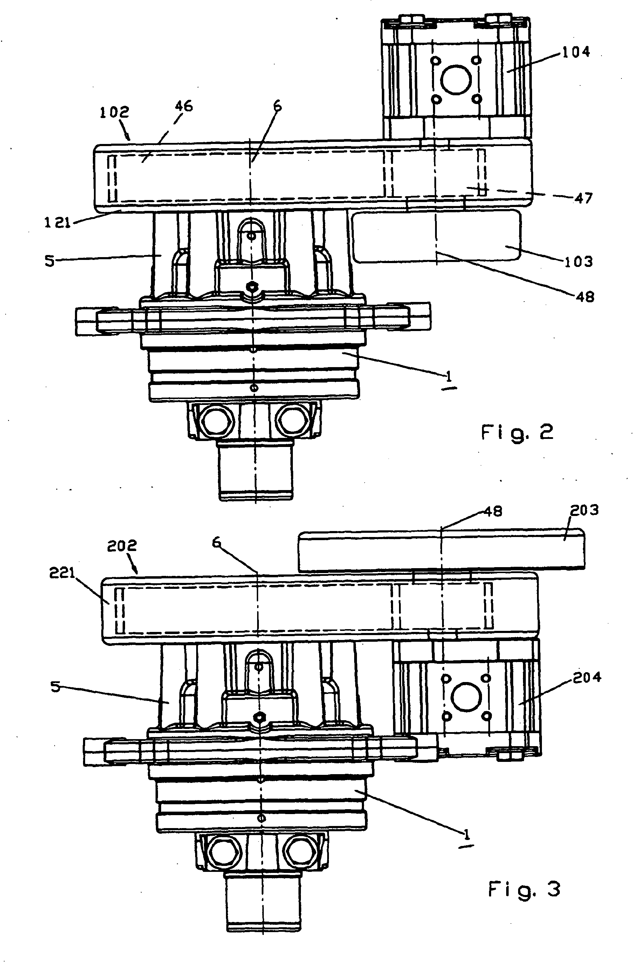

Die Figur 2 zeigt eine weitere Ausgestaltung der Antriebseinheit gemäß der Erfindung, wobei die erste Getriebeeinheit 1 auch bei der Ausführungsform gemäß Figur 2 der Ausgestaltung der Getriebeeinheit 1 bei der Figur 1 entspricht. Insofern wird auf die Beschreibung zu Figur 1 verwiesen.

An die erste Getriebeeinheit 1 ist die zweite Getriebeeinheit 102 angeschlossen, die abweichend zu der zweiten Getriebeeinheit gemäß Figur 1 ausgebildet ist. Die zweite Getriebeeinheit 102 umfasst ein zweites Gehäuse 121, das mit der ersten Getriebeeinheit 1 fest verbunden ist oder sogar zumindest teilweise eine Baueinheit damit bilden kann. Die zweite Getriebeeinheit 102 ist als Stirnradgetriebe gestaltet. Sie umfasst ein stirnverzahntes Zahnrad 46, das mit der ersten Getriebeeinheit 1 und dort insbesondere mit dem Lagerzapfen 27 gemäß Figur 1 drehfest verbunden ist, so dass es den Rotor 7 gemäß Figur 1 antreibt. Das Zahnrad 46 wird durch ein Zahnritzel 47 angetrieben, das von einem schnelllaufenden Motor 104, beispielsweise einem Hydraulikmotor oder Elektromotor, angetrieben wird, der drehzalmäßig ähnlich dem im Zusammenhang mit Figur 1 beschriebenen Hydraulikmotor ausgelegt ist. Das Zahnritzel 47 ist ebenfalls stirnverzahnt und kämmt mit dem im Durchmesser größeren Zahnrand 46, so dass eine Reduzierung der Drehzahl des Motors 104 erzielt wird. Das Zahnritzel 47 rotiert um die vierte Achse 48, welche auch die Antriebsachse des Motors 104 darstellt. Es ist ersichtlich, dass die vierte Achse 48 zu der ersten Achse 6 radial versetzt ist. Darüber hinaus sitzt der Motor 104 auf der der ersten Getriebeeinheit 1 abgewandten Seite der zweiten Getriebeeinheit 102. Auf der der ersten Getriebeeinheit 1 zugewandten Seite der zweiten Getriebeeinheit 102 sitzt auf der vierten Achse 48 die Schwungscheibe 103, die mit dem Zahnritzel 47 so verbunden ist, dass sie sich mit diesem dreht.

Die Figur 3 zeigt eine dritte Ausführungsform einer erfindungsgemäßen Antriebseinheit, wobei diese sich von der Ausbildung gemäß Figur 2 lediglich durch die Anordnung des Motors 204 und des Schwungrades 203 unterscheidet. Die erste Getriebeeinheit 1 entspricht wiederum der Gestaltung der Getriebeeinheit 1 so, wie sie im Zusammenhang mit Figur 1 detailliert beschrieben wurde. Die Zuordnung der zweiten Getriebeeinheit 202 und deren Ausgestaltung entspricht der im Zusammenhang mit Figur 2 beschriebenen, so dass hierzu auf die Beschreibung bei Figur 2 verwiesen wird.

Der Motor 204 ist zur ersten Achse 206 parallel versetzt angeordnet und weist als Antriebsachse die vierte Achse 48 auf. Der Motor 204 sitzt jedoch an dem Getriebegehäuse 221 an der der ersten Getriebeeinheit 1 zugewandten Seite, so dass der Motor 204 parallel versetzt zur ersten Getriebeeinheit 1 mit der ersten Achse 6 neben der ersten Getriebeeinheit 1 angeordnet ist.

Entsprechend ist das Schwungrad 203 an der der ersten Getriebeeinheit 1 abgewandten Seite des Gehäuses 221 der zweiten Getriebeeinheit 202 angeordnet.

### Bezugszeichenliste

- 1: erste Getriebeeinheit
- 2, 102, 202: zweite Getriebeeinheit
- 3, 103, 203: Schwungrad
- 4, 104, 204: Motor
- 5: erstes Gehäuse
- 6: erste Achse
- 7: Rotor
- 8: erstes Lager
- 9: zweites Lager
- 10: erstes Hohlzahnrad
- 11: Verzahnung
- 12: zweite Achse
- 13: Ausnehmung
- 14: Zahnritzel
- 15: Verzahnung
- 16: drittes Lager
- 17: viertes Lager
- 18: Abtriebselement
- 19: Schraube
- 20: Stift
- 21, 121, 221: zweites Gehäuse
- 22: Deckel
- 23: Planetenradträger
- 24: dritte Achse
- 25: Bohrung
- 26: Lagerbohrung
- 27: Lagerzapfen
- 28: Keil
- 29: fünftes Lager
- 30: sechstes Lager
- 31: zweites Hohlzahnrad
- 32: Lagerstift
- 33: Planetenzahnrad
- 34: Sonnenzahnrad
- 35: Anlagefläche am Planetenradträger
- 36: Anlagefläche am zweiten Gehäuse
- 37: Trennscheibe
- 38: Raum
- 39: erster Zapfenabschnitt des Sonnenzahnrades
- 40: zweiter Zapfenabschnitt des Sonnenzahnrades
- 41: Fixierscheibe
- 42: Kupplungshülse
- 43: Schraube
- 44: Brückenelement
- 45: Abtriebswelle des Hydraulikmotors
- 46: Zahnrad
- 47: Zahnritzel
- 48: vierte Achse
- N1: Drehzahl des Sonnenzahnrades
- N2: Drehzahl des Rotors / Antriebsdrehzahl der ersten Getriebeeinheit
- S: Schmierfett

## Patentansprüche

1. Antriebseinheit für oszillierend angetriebene Mähmesser umfassend
- eine erste Getriebeeinheit (1),
- die ein erstes Gehäuse (5) aufweist, welches eine erste Achse (6) bildet, die einen in dem ersten Gehäuse (5) um die erste Achse (6) drehbar gelagerten Rotor (7) aufweist,
- die ein in dem ersten Gehäuse (5) festgelegtes und innen verzahntes erstes Hohlzahnrad (10) aufweist,
- die ein in dem Rotor (7) um eine zweite Achse (12) drehbar gelagertes Zahnritzel (14) aufweist, wobei die zweite Achse (12) zur ersten Achse (6) radial versetzt ist und das Zahnritzel (14) das Abtriebsglied der Antriebseinheit bildet und mit dem ersten Hohlzahnrad (10) in Eingriff ist,
- eine zweite Getriebeeinheit (2, 102, 202),
- deren Abtrieb (34) mit dem Rotor (7) der ersten Getriebeeinheit (1) drehfest verbunden ist,
**dadurch gekennzeichnet,**
**dass** die zweite Getriebeeinheit (2, 102, 202) als Untersetzungsgetriebe gestaltet ist, und
**dass** die Antriebseinheit ferner einen Motor (4) umfasst, der eine Abtriebswelle (45) aufweist, die die zweite Getriebeeinheit (2, 102, 202) drehend antreibt und dessen Drehzahl (N1) von der als Untersetzungsgetriebe gestalteten zweiten Getriebeeinheit (2, 102, 202) auf die Antriebsdrehzahl (N2) der ersten Getriebeeinheit (1) reduziert wird.

2. Antriebseinheit nach Anspruch 1,
**dadurch gekennzeichnet,**
- **dass** die zweite Getriebeeinheit (2)
- einen mit dem Rotor (7) der ersten Getriebeeinheit (1) drehfest verbundenen und mit dieser um die erste Achse (6) rotierenden Planetenradträger (23) umfasst, der mindestens ein außen verzahntes Planetenzahnrad (33) trägt, das an diesem um eine dritte Achse (24), die zur ersten Achse (6) radial versetzt angeordnet ist, drehbar gelagert ist,
- ein innen mit einer Verzahnung versehenes zweites Hohlzahnrad (31) aufweist, das stationär gehalten ist und mit dem das mindestens eine Planetenzahnrad (33) in Eingriff ist,
- ein Sonnenzahnrad (34) aufweist, das mit dem mindestens einen Planetenzahnrad (33) in Eingriff ist, und
- **dass** die Abtriebswelle (45) des Motors (4) das Sonnenzahnrad (34) der zweiten Getriebeeinheit (2) drehend antreibt.

3. Antriebseinheit nach Anspruch 2,
**dadurch gekennzeichnet,**
**dass** die zweite Getriebeeinheit (2) ein zweites Gehäuse (21) aufweist, das am ersten Gehäuse (5) befestigt ist und das den Planetenradträger (23) mit dem mindestens einen Planetenzahnrad (33), das zweite Hohlzahnrad (31) und das Sonnenzahnrad (34) aufnimmt.

4. Antriebseinheit nach Anspruch 2,
**dadurch gekennzeichnet,**
**dass** die zweite Getriebeeinheit (2) einen Gehäuseabschnitt aufweist, der einstückig mit dem ersten Gehäuse ausgebildet ist und den Planetenradträger mit dem mindestens einen Planetenzahnrad, das Sonnenzahnrad und das zweite Hohlzahnrad aufnimmt.

5. Antriebseinheit nach einem der Ansprüche 2 oder 3,
**dadurch gekennzeichnet,**
**dass** die zweite Getriebeeinheit (2) durch ein Schmierfett (S) geschmiert ist und dass zwischen dem Planetenradträger (23) und dem zweiten Gehäuse (21) oder Gehäuseabschnitt, in dem dieser aufgenommnen ist, eine Trennscheibe (37) angeordnet ist, die in Richtung zum ersten Gehäusen (5) hin den das zweite Hohlzahnrad (31), das mindestens eine Planetenzahnrad (33) und das Sonnenzahnrad (34) aufnehmenden Raum (38) abdichtet.

6. Antriebseinheit nach Anspruch 5,
**dadurch gekennzeichnet,**
**dass** die Trennscheibe (37) zwischen dem zweiten Gehäuse (21) und dem zweiten Hohlzahnrad (31) und dem Planetenradträger (23) angeordnet ist.

7. Antriebseinheit nach Anspruch 5,
**dadurch gekennzeichnet,**
**dass** die Trennscheibe (37) am zweiten Gehäuse (21) bzw. am Gehäuseabschnitt drehfest gehalten ist.

8. Antriebseinheit nach einem der Ansprüche 3 oder 4,
**dadurch gekennzeichnet,**
**dass** das zweite Gehäuse (21) oder der Gehäuseabschnitt von der ersten Getriebeeinheit (1) weg durch einen Deckel (22) abgeschlossen ist.

9. Antriebseinheit nach Anspruch 2,
**dadurch gekennzeichnet,**
**dass** zwischen dem Motor (4) und dem Sonnenzahnrad (4) der zweiten Getriebeeinheit (2) ein Schwungrad (3) angeordnet ist.

10. Antriebseinheit nach Anspruch 1,
**dadurch gekennzeichnet,**
- **dass** die zweite Getriebeeinheit (102) ein mit dem Rotor (7) der ersten Getriebeeinheit (1) drehfest verbundenes und mit diesem um die erste Achse (6) rotierendes stirnverzahntes Zahnrad (46) und ein damit kämmendes stirnverzahntes Zahnritzel (47) umfasst, welches um eine zur ersten Achse (6) parallele vierte Achse (48) rotiert und von dem Motor (104) angetrieben wird.

11. Antriebseinheit nach Anspruch 10,
**dadurch gekennzeichnet,**
**dass** der Motor (104) parallel zu und neben der ersten Getriebeeinheit (1) angeordnet ist.

12. Antriebseinheit nach Anspruch 11,
**dadurch gekennzeichnet,**
**dass** ein Schwungrad (103) vorgesehen ist, welches mit dem Zahnritzel (47) drehend verbunden ist und an der der ersten Getriebeeinheit (1) und dem Motor (104) abgewandten Seite der zweiten Getriebeeinheit (102) angeordnet ist.

13. Antriebseinheit nach Anspruch 10,
**dadurch gekennzeichnet,**
**dass** der Motor (204) parallel und von der ersten Getriebeeinheit (1) weg weisend an die zweite Getriebeeinheit (202) angeschlossen ist.

14. Antriebseinheit nach Anspruch 13,
**dadurch gekennzeichnet,**
**dass** ein Schwungrad (203) vorgesehen ist, welches mit dem Zahnritzel (47) drehend verbunden ist und an der der ersten Getriebeeinheit (1) zugewandten Seite der zweiten Getriebeeinheit (202) neben der ersten Getriebeeinheit (1) angeordnet ist.

15. Antriebseinheit nach Anspruch 10,
**dadurch gekennzeichnet,**
**dass** die zweite Getriebeeinheit (102, 202) ein zweites Gehäuse (121, 221) aufweist, das an dem ersten Gehäuse (5) der ersten Getriebeeinheit (1) befestigt ist oder mit diesem zumindest teilweise eine Einheit bildet.

16. Antriebseinheit nach einem der Ansprüche 1, 2, 9, 11 oder 13,
**dadurch gekennzeichnet,**
**dass** der Motor (4, 104, 204) ein Hydraulikmotor oder ein Elektromotor ist.

## Claims

1. A drive unit for oscillatingly driven mowing blades, comprising
a first transmission drive unit (1),
which comprises a first housing (5) forming a first axis (6);
which comprises a rotor (7) rotatably supported in the first housing (5) around the first axis (6);
which comprises an internally toothed first hollow gear (10) secured in the first housing (5);
which comprises a toothed pinion (14) rotatably supported in the rotor (7) around a second axis (12), wherein the second axis (12) is radially offset relative to the first axis (6) and wherein the toothed pinion (14) forms the output member of the drive unit and engages the first hollow gear (10);
a second transmission unit (2, 102, 202)
whose output (34) is connected in a rotationally fast way to the rotor (7) of the first transmission unit (1),
**characterised in**
**that** the second transmission unit (2, 102, 202) is provided in the form of a reduction gear and
**that** the drive unit, furthermore, comprises a motor (4) which comprises an output shaft (45) which rotatingly drives the second transmission unit (2, 102, 202) and whose speed (N1) is reduced by the second transmission unit (2, 102, 202) provided in the form of a reduction gear to the driving speed (N2) of the first transmission unit (1).

2. A drive unit according to claim 1,
**characterised in**
**that** the second transmission unit (2) comprises
a planetary gear carrier (23) which is connected in a rotationally fast way to the rotor (7) of the first transmission unit (1) and rotates therewith around the first axis (6) and which carries at least one planetary gear (33) which is toothed on its outside and which is supported on said planetary gear carrier (23) so as to rotate around a third axis (24) which is arranged so as to be radially offset relative to the first axis (6);
a second hollow gear (31) which is provided with teeth on its inside, which is held in a stationary condition and which is engaged by the at least one planetary gear (33);
a sun gear (34) which engages the at least one planetary gear (33); and
**that** the output shaft (45) of the motor (4) rotatingly drives the sun gear (34) of the second transmission unit (2).

3. A drive unit according to claim 2,
**characterised in**
**that** the second transmission unit (2) comprises a second housing (21) which is secured to the first housing (5) and which receives the planetary gear carrier (23) with the at least one planetary gear (33), the second hollow gear (31) and the sun gear (34).

4. A drive unit according to claim 2,
**characterised in**
**that** the second transmission unit (2) comprises a housing portion which is produced so as to be integral with the first housing and accommodates the planetary gear carrier with the at least one planetary gear, the sun gear and the second hollow gear.

5. A drive unit according to any one of claims 2 or 3,
**characterised in**
**that** the second transmission unit (2) is lubricated by a lubricating grease (S) and that between the planetary gear carrier (23) and the second housing (21) or the housing portion in which the planetary carrier (23) is received, there is arranged a separating plate (37) which, towards the first housing (5), seals the chamber (38) accommodating the second hollow gear (31), the at least one planetary gear (33) and the sun gear (34).

6. A drive unit according to claim 5,
**characterised in**
**that** the separating plate (37) is arranged between the second housing (21) and the second hollow gear (31) and the planetary gear carrier (23).

7. A drive unit according to claim 5,
**characterised in**
**that** the separating plate (37) is held in a rotationally fast way at the housing (21) or the housing portion.

8. A drive unit according to any one of claims 3 or 4,
**characterised in**
**that** the second housing (21) or the housing portion, away from the first transmission unit (1), is closed by a cover (22).

9. A drive unit according to claim 2,
**characterised in**
**that** between the motor (4) and the sun gear (4) of the second transmission unit (2), there is arranged a flywheel (3).

10. A drive unit according to claim 2,
**characterised in**
**that** the second transmission unit (102) comprises a gearwheel (46) which is provided with end teeth, which is connected in a rotationally fast way to the rotor (7) of the first transmission unit (1) and which rotates therewith around the first axis (6), as well as a toothed pinion (47) which is provided with end teeth, which engages said gearwheel (46), which rotates around a fourth axis (48) extending parallel to the first axis (6), and is driven by the motor (104).

11. A drive unit according to claim 10,
**characterised in**
**that** the motor (104) is arranged parallel to and next to the first transmission unit (1).

12. A drive unit according to claim 11,
**characterised in**
**that** there is provided a flywheel (103) which is rotatingly connected to the toothed pinion (47) and which is arranged at the end of the second transmission unit (102) which faces away from the first transmission unit (1) and away from the motor (104).

13. A drive unit according to claim 10,
**characterised in**
**that** the motor (204) is connected to the second transmission unit (202) so as to extend parallel to and point away from the first drive unit (1).

14. A drive unit according to claim 13,
**characterised in**
**that** there is provided a flywheel (203) which is rotatingly connected to the toothed pinion (47) and which is arranged next to the first transmission unit (1), on the side of the second transmission unit (202) facing the first transmission unit (1).

15. A drive unit according to claim 10,
**characterised in**
**that** the second transmission unit (102, 202) comprises a second housing (121, 221) which is secured to the first housing (5) of the first transmission unit (1) or at least partially forms a unit therewith.

16. A drive unit according to any one of claims 1, 2, 9, 11, or 13,
**characterised in**
**that** the motor (4, 104, 204) is a hydraulic motor or an electric motor.

## Revendications

1. Unité d'entraînement pour des lames de coupe entraînées de façon oscillante comprenant
- une première unité de transmission (1),
- qui présente un premier boîtier (5), qui forme un premier axe (6),
- qui présente un rotor (7) disposé à rotation autour du premier axe (6) dans le premier boîtier (5),
- qui présente une première roue dentée creuse (10) fixée dans le premier boîtier (5) et engrenant avec lui,
- qui présente un pignon (14) disposé à rotation autour d'un second axe (12) dans le rotor (7), dans lequel le second axe (12) est décalé radialement par rapport au premier axe (6) et le pignon forme l'élément de sortie de l'unité d'entraînement et est en prise avec la première roue dentée creuse (10),
- une seconde unité de transmission (2, 102, 202),
- dont la sortie (34) est reliée solidaire en rotation avec le rotor (7) de la première unité de transmission (1),
**caractérisée**
**en ce que** la seconde unité de transmission (2, 102, 202) est formée sous la forme d'un démultiplicateur, et
**en ce que** l'unité d'entraînement comprend en outre un moteur (4), qui présente un arbre de sortie (45), qui entraîne à rotation la seconde unité de transmission (2, 102, 202) et dont la vitesse (N1) est réduite par la seconde unité de transmission (2, 102, 202) sous la forme d'un démultiplicateur à la vitesse d'entraînement (N2) de la première unité de transmission (1).

2. Unité d'entraînement selon la revendication 1, **caractérisée**
- **en ce que** la seconde unité de transmission (2)
- comprend un porte-satellites (23) relié solidaire en rotation au rotor (7) de la première unité de transmission (1) et tourne avec celui-ci autour du premier axe (6), qui porte au moins un engrenage planétaire (33) à denture extérieure, qui est disposé à rotation sur celui-ci autour d'un troisième axe (24), qui est disposé décalé radialement par rapport au premier axe (6),
- présente une deuxième roue dentée creuse (31) à denture intérieure, qui est maintenue stationnaire et qui est en prise avec l'engrenage planétaire (33),
- présente une roue solaire (34), qui est en prise avec le au moins un engrenage planétaire (33), et
- **en ce que** l'arbre de sortie (45) du moteur (4) entraîne à rotation la roue solaire (34) de la seconde unité de transmission (2).

3. Unité d'entraînement selon la revendication 2, **caractérisée en ce que** la seconde unité de transmission (2) présente un second boîtier (21), qui est fixé au premier boîtier (5) et comprend le porte-satellites (23) comportant la au moins un engrenage planétaire (33), la deuxième roue dentée creuse (31) et la roue solaire (34).

4. Unité d'entraînement selon la revendication 2, **caractérisée en ce que** la seconde unité de transmission (2) présente un tronçon de boîtier, qui est formé d'une seul tenant avec le premier boîtier et comprend le porte-satellites comportant le au moins un engrenage planétaire, la roue solaire et la deuxième roue dentée creuse.

5. Unité d'entraînement selon l'une des revendications 2 ou 3, **caractérisée en ce que** la seconde unité de transmission (2) est lubrifiée par une graisse lubrifiante (S) et **en ce qu'**entre le porte-satellites (23) et le second boîtier (21) ou le tronçon de boîtier, dans lequel celui-ci est reçu, est disposée une plaque de séparation (37), qui étanchéifie l'espace (38) comprenant la seconde roue dentée creuse (31), le au moins un engrenage planétaire (33) et la roue solaire (34) en direction du premier boîtier (5).

6. Unité d'entraînement selon la revendication 5, **caractérisée en ce que** la plaque de séparation (37) est disposée entre le second boîtier (21) et la seconde roue dentée creuse (31) et le porte-satellites (23).

7. Unité d'entraînement selon la revendication 5, **caractérisée en ce que** la plaque de séparation (37) est maintenue solidaire en rotation sur le second boîtier (21) ou le tronçon de boîtier.

8. Unité d'entraînement selon l'une des revendications 3 ou 4, **caractérisée en ce que** le second boîtier (21) ou le tronçon de boîtier de la première unité de transmission (1) est fermé par un couvercle (22).

9. Unité d'entraînement selon la revendication 2, **caractérisée en ce qu'**un volant (3) est disposé entre le moteur (4) et la roue solaire (34) de la seconde unité de transmission (2).

10. Unité d'entraînement selon la revendication 1, **caractérisée en ce que** la seconde unité de transmission (102) comprend une roue dentée (46) à denture frontale reliée solidaire en rotation au rotor (7) de la première unité de transmission (1) et tournant avec celui-ci autour de l'axe (6) et un pignon (47) à denture frontale engrenant avec celui-ci, qui tourne autour d'un quatrième axe (48) parallèle au premier axe (6) et est entraîné par le moteur (104).

11. Unité d'entraînement selon la revendication 10, **caractérisée en ce que** le moteur (104) est disposé parallèle à et près de la première unité de transmission (1).

12. Unité d'entraînement selon la revendication 11, **caractérisée en ce qu'**un volant (103) est prévu, qui est fixé à rotation avec le pignon (47) et est disposé sur le côté opposé à la première unité de transmission (1) et au moteur (104) de la seconde unité de transmission (102).

13. Unité d'entraînement selon la revendication 10, **caractérisée en ce que** le moteur (204) est relié à la seconde unité de transmission (202) parallèlement et depuis la première unité de transmission (1).

14. Unité d'entraînement selon la revendication 13, **caractérisée en ce qu'**un volant (203) est prévu, qui est relié à rotation avec le pignon (47) et est disposé sur le côté tourné vers la première unité de transmission (1) de la seconde unité de transmission (202) près de la première unité de transmission (1).

15. Unité d'entraînement selon la revendication 10, **caractérisée en ce que** la seconde unité de transmission (102, 202) présente un second boîtier (121, 221), qui est fixé au premier boîtier (5) de la première unité de transmission (1) ou forme une unité avec celle-ci au moins partiellement.

16. Unité d'entraînement selon l'une des revendications 1, 2, 9, 11 ou 13, **caractérisée en ce que** le moteur (4, 104, 204) est un moteur hydraulique ou un moteur électrique.
